# EUROPEAN PATENT APPLICATION

(11) **EP 2 256 015 A2**
(43) Date of publication of application: **01.12.2010**
(21) Application number: 10163766.8
(22) Date of filing: 25.05.2010
(51) Int. Cl.: B62D 1/184

(54) **Steering column device**

(30) Priority: 27.05.2009 JP 2009127599
(71) Applicant: FUJI KIKO Co., Ltd., Kosai-shi, Shizuoka 431-0431 (JP)
(72) Inventor: Sakata, Toru, Kosai-shi Shizuoka 431-0431 (JP)
(74) Representative: Grünecker, Kinkeldey, Stockmair & Schwanhäusser Anwaltssozietät

(57) **Abstract**

In a steering column device (1), when a fastening bolt (8) is rotated to a locked side, movement of a distance bracket (6) in a telescopic direction is restrained by a movable die (12) displaced by an urging force of an urging unit (15) to bring a movable-side tooth portion (12A) into mesh with a fixed-side tooth portion (11) and by a body mount bracket (5) and the distance bracket (6) brought into pressure contact with each other with an axial force of the fastening bolt (7). When the fastening bolt (7) is rotated to a unlocked side, a restraint of movement of the distance bracket (6) in the telescopic direction is released by the movable die (12) displaced by a cam protrusion to bring the movable-side tooth portion (12A) out of mesh with the fixed-side tooth portion (11) and by the body mount bracket (5) and the distance bracket (6) brought out of pressure contact with each other with the axial force of the fastening bolt (7) released.

## Description

### BACKGROUND OF THE INVENTION

### 1. FIELD OF THE INVENTION

The present invention relates to a steering column device including a steering column tube by which a steering shaft is rotatably supported.

### 2. DESCRIPTION OF THE RELATED ART

A related steering column device is described in Japanese Unexamined Patent Application Publication No. Hei 8-80857. The steering column device includes a telescopic adjustment mechanism for extending or contracting a steering shaft to move a steering wheel to a position which allows a driver to comfortably drive.

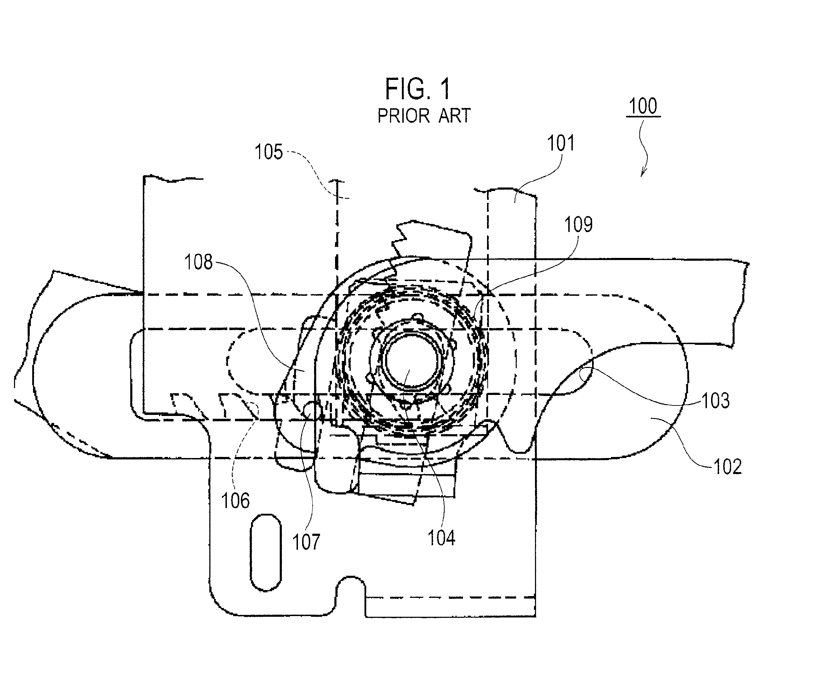

As shown in FIG. 1, in a steering column device 100, a nut fixed to an operation lever is screwed onto a fastening bolt 104 which passes through an upper bracket 101 to be fixed to a vehicle body and through telescopic-adjustment long openings 103 provided in a jacket fixing bracket 102 clamped by the upper bracket 101. When the operation lever is turned so that the upper bracket 101 may be restrained by a jacket holder 105 and the jacket fixing bracket 102, a steering wheel is locked in a telescopic adjustment set position desired by a driver.

A tooth portion 106 is provided in the telescopic-adjustment long openings 103 into which the fastening bolt 104 is loosely fitted. A pin holder 108 having a lock pin 107 which is provided in a protruding manner and which engages with and disengages from the tooth portion 106 is loosely fitted to the fastening bolt 104, and a coil spring 109 is interposed between the pin holder 108 and the operation lever. Accordingly, when locking is released, the movement of the steering wheel is not prevented. Also, when locking is performed, the tooth portion 106 engages with the lock pin 107, and the movement of the steering wheel can be prevented.

### SUMMARY OF THE INVENTION

In the event of a crash or the like, an air bag installed in the steering wheel inflates in front of a driver to reduce an impact on the driver. The air bag cannot sufficiently reduce an impact on the driver if the air bag does not inflate in front of the driver. Accordingly, in a steering column device, it is required that a steering shaft should not accidentally move (extend or contract) in the direction of telescopic adjustment except when an impact is absorbed.

However, in the technique described in Japanese Unexanmined Patent Application Publication No. Hei 8-80857, since the lock pin 107 is provided on the pin holder 108 to be cantilevered therefrom, it is difficult to impart sufficient mechanical strength to the lock pin 107. In the case where a heavy load is inputted to the steering wheel, the lock pin 107 may fail to support the load and be broken, and the steering shaft may accidentally move (extend or contract).

Further, depending on the position in which the steering wheel is locked, the lock pin 107 may be restrained while being in contact with the top of one tooth of the tooth portion 106. In the case where a heavy load is inputted to the steering wheel in such a state, the steering shaft may extend or contract until the lock pin 107 engages with a next tooth of the tooth portion 106. In such a case, a large extension or contraction margin structurally occurs which corresponds to the diameter of the lock pin 107. Thus, there is a risk that the air bag cannot sufficiently reduce an impact on the driver.

An object of the present invention is to provide a steering column device which reduces the amount of extension or contraction of a steering shaft in the direction of telescopic adjustment when a heavy load is inputted to a steering wheel and which can reliably prevent movement in the direction of telescopic adjustment due to the extension or contraction.

To achieve the above object, an aspect of the present invention is a steering column device comprising: a body mount bracket fixed to a vehicle body; a steering column tube configured to rotatably support a steering shaft; a distance bracket fixed to the steering column tube; a fixed-side tooth portion provided in any one of the body mount bracket and the distance bracket movably together in an axial direction of the steering shaft, the fixed-side tooth portion having a plurality of fixed teeth formed in a form of a rack in the axial direction; a guide member having a guide portion formed in a direction perpendicular to the axial direction; a movable die disposed to be movable along the guide portion, the movable die including a movable-side tooth portion having a plurality of movable teeth formed in a form of a rack in the axial direction; an urging unit configured to urge the movable-side tooth portion toward the fixed-side tooth portion; a fastening bolt passing through the body mount bracket, the distance bracket, and the guide member, the fastening bolt being configured to be rotatable between a locked side at which movement of the distance bracket is locked and an unlocked side at which the distance bracket is unlocked; and a cam member having a cam protrusion and configured to rotate together with the fastening bolt, wherein when the fastening bolt is rotated to the locked side, movement of the distance bracket in the axial direction is restrained by the movable die displaced by an urging force of the urging unit to bring the movable-side tooth portion into mesh with the fixed-side tooth portion and by the body mount bracket and the distance bracket brought into pressure contact with each other with an axial force of the fastening bolt, and when the fastening bolt is rotated to the unlocked side, a restraint of movement of the distance bracket in the axial direction is released by the movable die displaced by the cam protrusion to bring the movable-side tooth portion out of mesh with the fixed-side tooth portion and by the body mount bracket and the distance bracket brought out of pressure contact with each other with the axial force of the fastening bolt released.

According to the aspect, when the fastening bolt is rotated to the locked side, the movable die is displaced by the urging force of the urging unit to bring the movable-side tooth portion into mesh with the fixed-side tooth portion, and the distance bracket is brought into pressure contact with the body mount bracket by the axial force of the fastening bolt to be restrained in the direction of telescopic adjustment. Thus, a high-strength structure can be obtained which reduces the amount of movement of the steering shaft in the direction of telescopic adjustment when a heavy load is inputted to a steering wheel. Also, movement in the direction of telescopic adjustment can be reliably prevented by a simple operation.

Moreover, the mesh between the fixed-side tooth portion and the movable die is mesh with teeth on both sides. Accordingly, even if the fixed-side tooth portion and the movable die are not in tight mesh with each other during restraint in the direction of telescopic adjustment, when a load is inputted, the fixed-side tooth portion and the movable die can be meshed with each other by a small amount of movement corresponding to the tooth pitch. Thus, the movement of an air bag in the direction of telescopic adjustment can be minimized, and an impact on a driver can be sufficiently reduced.

Further, when the fastening bolt is rotated to the unlocked side, the cam protrusion provided in a pressing member in a protruding manner presses the movable die to throw the movable-side tooth portion out of mesh with the fixed-side tooth portion and to release the axial force of the fastening bolt. Thus, the distance bracket is brought out of pressure contact with the body mount bracket, and released from restraint in the direction of telescopic adjustment. Accordingly, release from restraint in the direction of telescopic adjustment is reliably performed by a simple operation, and the steering wheel can be smoothly positioned in the direction of telescopic adjustment.

Furthermore, since the movable die slides along the guide member, the movable die can always be brought into constant mesh with the fixed-side tooth portion regardless of the position of the movable die within the telescopic-adjustment long opening. Thus, telescopic adjustment locking can be reliably performed.

Any one of the body mount bracket and the distance bracket may have a telescopic-adjustment long opening formed in the axial direction. The fixed-side tooth portion may be disposed in at least one of upper and lower portions of the telescopic-adjustment long opening. The movable die may include: the movable-side tooth portion disposed above, below, or above and below the fixed-side tooth portion to be meshable with the fixed-side tooth portion; and a protrusion configured to slidably pass through the guide portion and to engage with the cam protrusion. The urging unit may urge the movable die toward the fixed-side tooth portion.

In the above-described configuration, a pair of movable dies are disposed to face each other with the fixed-side tooth portion interposed therebetween, and the pair of movable dies are connected and urged by the urging unit in a direction in which the pair of movable dies move closer to each other. Alternatively, a movable die is disposed above or below the fixed-side tooth portion to be meshable with the fixed-side tooth portion, and the movable-side tooth portion is urged toward the fixed-side tooth portion by the urging unit. Accordingly, the number of movable dies can be easily changed to one or two in accordance with the magnitude of an assumed impact load.

The steering column device may further comprise: a tooth plate configured to engage with the distance bracket in the axial direction and disposed so that the body mount bracket is interposed between the tooth plate and the distance bracket. The tooth plate may have a telescopic-adjustment long opening formed in the axial direction. The fixed-side tooth portion may be disposed in at least one of upper and lower portions of the telescopic-adjustment long opening. The movable die may include: the movable-side tooth portion disposed above, below, or above and below the fixed-side tooth portion to be meshable with the fixed-side tooth portion; and a protrusion configured to slidably pass through the guide portion and to engage with the cam protrusion. The urging unit may be disposed between the guide member and the movable die. When the fastening bolt is rotated to the locked side, the movement of the body mount bracket in the axial direction may be restrained by the body mount bracket clamped with pressure between the distance bracket and the tooth plate with the axial force of the fastening bolt.

In the above-described configuration, a movable die or dies is or are disposed above, below, or above and below the fixed-side tooth portion to be meshable with the fixed-side tooth portion, and the urging unit is disposed between the guide member and the movable die or dies. Accordingly, the number of movable dies can be easily changed to one or two in accordance with the magnitude of an assumed impact load.

Moreover, the body mount bracket is clamped between and thus pressure-contacted with the distance bracket and the tooth plate, and the tooth plate is clamped between and thus pressure-contacted with the body mount bracket and the guide member. Accordingly, this configuration enables preventing movement in the direction of telescopic adjustment when a heavy load is inputted, and increasing holding force in the direction of telescopic adjustment even in a state in which the fixed-side tooth portion and the movable-side tooth portion are out of mesh with each other during normal usage.

### BRIEF DESCRIPTION OF THE DRAWINGS

FIG. 1 is an enlarged side view of a principal part, showing a locked state of a lock mechanism of a related steering column device.
FIG. 2 is a side view of a steering column device according to a first embodiment of the present invention.
FIG. 3 is an enlarged view of a principal part in a cross section taken along III-III line of FIG. 5, showing a locked state of a lock mechanism of the steering column device according to the first embodiment of the present invention.
FIG. 4 is an enlarged view of a principal part in a cross section taken along III-III line of FIG. 5, showing an unlocked state of the lock mechanism of the steering column device according to the first embodiment of the present invention.
FIG. 5 is a cross-sectional view taken along V-V line of FIG. 3, showing the steering column device according to the first embodiment of the present invention.
FIG. 6 is an enlarged side view of a principal part, showing a lock state of a lock mechanism of a steering column device according to a second embodiment of the present invention.
FIG. 7 is an enlarged side view of a principal part, showing an unlocked state of the lock mechanism of the steering column device according to the second embodiment of the present invention.
FIG. 8 is a cross-sectional view taken along VIII-VIII line of FIG. 6, showing the steering column device according to the second embodiment of the present invention.
FIG. 9 is an enlarged side view of a principal part, showing a locked state of a lock mechanism of a steering column device according to a modified example of the second embodiment of the present invention.

### DETAILED DESCRIPTION OF THE EMBODIMENTS

Hereinafter, embodiments of the present invention will be described with reference to the drawings.

### [First Embodiment]

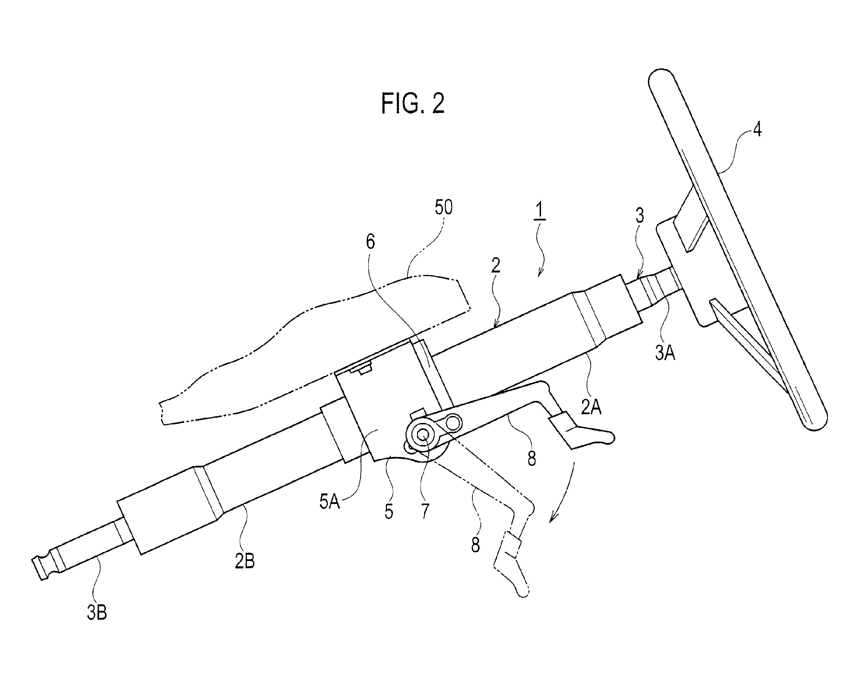

As shown in FIG. 2, a steering column device 1 according to a first embodiment of the present invention includes a cylindrical steering column tube 2 disposed to be obliquely inclined downward toward the front of a vehicle body (to the left in FIG. 2). In the steering column tube 2, a steering shaft 3 is rotatably inserted. The steering column tube 2 includes an upper tube 2A and a lower tube 2B, one of which is fitted into the other to be slidable in the axial direction. The steering shaft 3 includes an upper shaft 3A and a lower shaft 3B, one of which is spline-fitted to the other to be slidable in the axial direction. To an upper end of the upper shaft 3A, a steering wheel 4 is fixed. A lower end portion of the lower shaft 3B is connected to a steering gear box (not shown) via a universal joint (not shown).

The steering column tube 2 is clamped by a body mount bracket 5 fixed to a body bracket 50, a distance bracket 6 fixed to the steering column tube 2, and a fastening bolt 7 passing through the body mount bracket 5 and the distance bracket 6 so as to be swingable in the up-and-down direction of the vehicle (direction of tilt adjustment) and to be extendable and contractible in the axial direction of the steering shaft 3 (the front-and-rear direction of the vehicle, the direction of telescopic adjustment). In other words, the steering column device 1 according to this embodiment includes a lock mechanism 10 for fixing the steering wheel 4 at a position desired by a driver, and the lock mechanism 10 has a tilt adjusting function by which the position of the steering wheel 4 in the height direction can be adjusted in accordance with physical attributes and preferences of the driver and a telescopic adjusting function by which the position of the steering wheel 4 in the front-and-rear direction can also be adjusted in accordance with physical attributes and preferences of the driver.

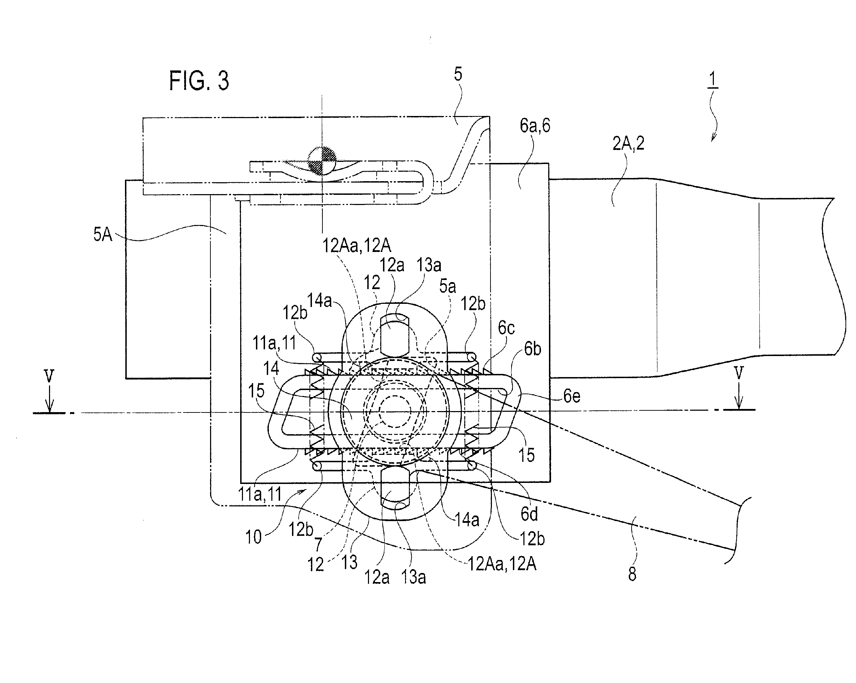

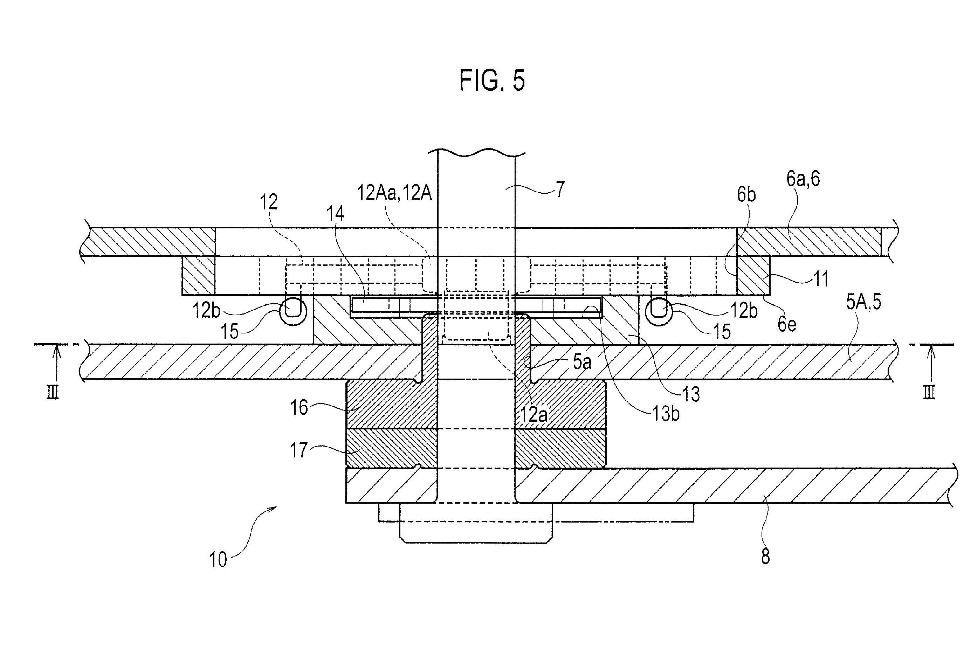

Details of the configuration of the lock mechanism 10 will be described with reference to FIGS. 3 to 5.

The body mount bracket 5 has two sidewalls 5A (only one of which is shown in FIGS. 3 to 5) drooping from the body bracket 50 fixed to the vehicle body, and the steering column tube 2 is disposed between the sidewalls 5A. Each of the sidewalls 5A has a tilt-adjustment long opening 5a in the shape of an arc centered at a pivot (not shown) about which the steering column tube 2 swings.

The distance bracket 6 is formed to have an approximately U-shaped cross section and to be open upward, and an opening portion thereof is fixed to the steering column tube 2. The distance bracket 6 has right and left sidewalls 6a. The right and left side walls 6a of the distance bracket 6 have outer surfaces disposed to face inner surfaces of the side walls 5A of the body mount bracket 5, and are configured to be slidable in a state of being sandwiched between the side walls 5A of the body mount bracket 5. In each of the side walls 6a of the distance bracket 6, a telescopic-adjustment long opening 6b is formed.

The telescopic-adjustment long openings 6b are formed in the direction of telescopic adjustment. Further, the telescopic-adjustment long openings 6b have peripheral walls 6e provided on outer surfaces of the side walls 6a in a protruding manner to surround the long openings formed in the sidewalls 6a of the distance bracket 6, respectively. At upper and lower borders 6c and 6d of the peripheral walls 6e of the telescopic-adjustment long openings 6b, a fixed-side tooth portion 11 is integrally formed which includes multiple fixed teeth 11a disposed in the form of a rack in the direction of telescopic adjustment.

The fixed-side tooth portion 11 includes the fixed teeth 11a which are provided integrally with the upper and lower borders 6c and 6d of the telescopic-adjustment long openings 6b formed in the distance bracket 6 and which are provided in the form of a rack.

A pair of movable dies 12 are disposed above and below the fixed-side tooth portion 11, respectively, to be slidable along guide holes 13a (guide portions) of an undermentioned guide member 13 in the up-and-down direction of the vehicle (direction perpendicular to the axial direction of the steering shaft 3) and to be meshable with the fixed-side tooth portion 11.

Each of the movable dies 12 has a protrusion 12a provided at the center thereof to integrally protrude outward in the width direction of the vehicle. The protrusion 12a slidably passes through the guide holes 13a to protrude outward in the width direction of the vehicle. A transverse section of the protrusion 12a provided in each of the movable die 12 in a protruding manner is of an approximately oval shape (elliptical shape), and inner and outer surfaces of the protrusion 12a are each shaped in the form of an arc surface. In each of portions of the movable dies 12 which face the fixed-side tooth portion 11, a movable-side tooth portion 12A is integrally provided which has multiple movable teeth 12Aa formed in the form of a rack in the direction of telescopic adjustment. Each of the movable dies 12 has hooks 12b formed at two opposite ends, respectively. The movable dies 12 are urged by a pair of spiral springs 15 (urging unit), each of which links facing ones of the hooks 12b, in a direction in which the movable dies 12 are pulled toward each other, i.e., in a direction in which the movable teeth 12Aa of the two movable dies 12 are brought into mesh with the corresponding fixed teeth 11a.

The guide member 13 is disposed outward of the fixed-side tooth portion 11 and the movable dies 12 in the width direction of the vehicle so that the fixed-side tooth portion 11 and the movable dies 12 may be clamped between the guide member 13 and the distance bracket 6.

On two sides of the guide member 13, the guide holes 13a of approximately oval shapes (elliptical shapes) are formed in the up-and-down direction of the vehicle. In these guide holes 13a, the protrusions 12a provided in the movable dies 12 in a protruding manner are slidably fitted, respectively. The length of each of the guide holes 13a in the longitudinal direction is set longer than that of each of the protrusions 12a in the longitudinal direction. A housing recess 13b is formed inward of the guide member 13 in the width direction of the vehicle. In the housing recess 13b, a mesh release plate 14 (cam member) is housed.

The mesh release plate 14 is fixed to an operation lever 8 (fastening bolt 7) by a spline fitting or the like. The mesh release plate 14 is shaped approximately in the form of a disk. As shown in FIG. 3, at two opposite positions on the outer circumference of the mesh release plate 14, release protrusions 14a (cam protrusions) in the form of a pin having an arc surface are integrally provided to protrude outward in the radial direction. By operating the operation lever 8, the mesh release plate 14 is rotated, and the release protrusions 14a press the protrusions 12a of the movable dies 12 to throw the movable-side tooth portions 12A out of mesh with the fixed-side tooth portion 11 (telescopic adjustment locking is released).

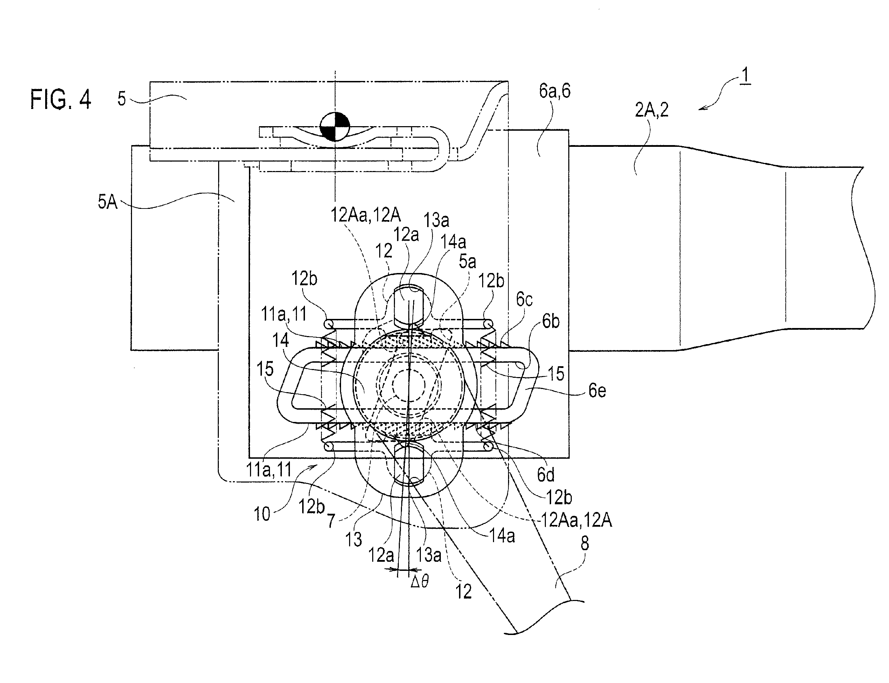

A slide cam 16 is fitted to the guide member 13, and the fastening bolt 7 passes through the slide cam 16. A lever cam 17 is attached to the operation lever 8. The slide cam 16 and the lever cam 17 are disposed to face each other. On surfaces of the slide cam 16 and the lever cam 17 which face each other, cam faces are formed, respectively. As shown in FIGS. 3 and 4, the fastening bolt 7 is inserted into the tilt-adjustment long openings 5a and the telescopic-adjustment long openings 6b, and the operation lever 8 is fixed to the fastening bolt 7 at one end portion which protrudes outward from the body mount bracket 5, with the lock mechanism 10 interposed therebetween. Thus, when the operation lever 8 is turned, cam noses of the cam faces of the slide cam 16 and the lever cam 17 abut against each other to impart an axial force to the fastening bolt 7.

Next, functions of the lock mechanism 10 configured as described above will be described.

When the operation lever 8 is at a locked position indicated by solid lines in FIG. 2, the steering wheel 4 is fixed in the directions of tilt adjustment and telescopic adjustment. In this state, the cam noses of the cam faces, which are formed between the slide cam 16 and the lever cam 17, abut against each other. Accordingly, the body mount bracket 5 is pressed inward through the guide member 13 and the fixed-side tooth portion 11. As a result, the force by which the body mount bracket 5 clamps the distance bracket 6 increases, and the friction force acting therebetween also increases. Accordingly, the position of the steering column tube 2 fixed to the distance bracket 6 is fixed, and the positions of the steering wheel 4 in the height direction and front-and-rear direction are also fixed.

Further, when the operation lever 8 is at the locked position (solid lines), as shown in FIG. 3, the release protrusions 14a provided on the outer circumference of the mesh release plate 14 in a protruding manner is out of engagement with the protrusions 12a provided in the movable dies 12 in a protruding manner. Thus, the two movable dies 12 are pulled toward each other by the pair of spiral springs 15 to be pressed against the fixed-side tooth portion 11, and the movable teeth 12Aa formed in the movable dies 12 are automatically meshed with the fixed teeth 11a of the fixed-side tooth portion 11. This establishes a telescopic adjustment locking state in which the movement of the guide member 13, the mesh release plate 14, and the fastening bolt 7 along the telescopic-adjustment long openings 6b is restrained. Accordingly, the position of the steering wheel 4 in the height direction is reliably locked. Thus, even in a case where a driver collides with the steering wheel 4 due to, for example, a car crash, there arises no problem that the distance bracket 6 slides forward with respect to the body mount bracket 5 to change the position of the steering wheel 4 in the front-and-rear direction.

Moreover, as shown in FIG. 3, the pair of movable dies 12 are slidably provided on a line passing through the center of the fastening bolt 7. Accordingly, the movable dies 12 can always be brought into constant mesh with the fixed-side tooth portion 11 regardless of the positions of the movable dies 12 within the telescopic-adjustment long openings 6b. Thus, telescopic adjustment locking can be reliably performed.

Next, when the operation lever 8 is at an unlocked position indicated by chain lines in FIG. 2, tilt and telescopic adjustment of the steering wheel 4 can be performed. When the operation lever 8 is turned from the locked position (position indicated by solid lines) in FIG. 2 to the unlocked position in a direction indicated by an arrow (position indicated by chain lines), the release protrusions 14a provided in a protruding manner in the mesh release plate 14 which rotates together with the operation lever 8 engage with the protrusions 12a of the movable dies 12 to push the two movable dies 12 against the urging force of the spiral springs 15 as shown in FIG. 4. Thus, the movable dies 12 slide along the guide holes 13a of the guide member 13. Accordingly, the movable teeth 12Aa of the movable dies 12 move away from the fixed teeth 11a of the fixed-side tooth portion 11 to be thrown out of mesh therewith, and telescopic adjustment locking is also released.

In this embodiment, in a state in which the operation lever 8 is turned to the unlocked position indicated by chain lines to release telescopic adjustment locking as shown in FIG. 4, the release protrusions 14a of the mesh release plate 14 are rotated past a center line connecting the centers of the protrusions 12a of the movable dies 12 and the center of the fastening bolt 7 by an angle Δθ shown in the drawing to pass over top portions of the respective protrusions 12a and to be at rest. This prevents the mesh release plate 14 and the operation lever 8 from being pushed back by the urging force of the spiral springs 15 and thus causing the movable teeth 12Aa of the movable dies 12 to engage with the fixed teeth 11a of the fixed-side tooth portion 11 again. Accordingly, telescopic adjustment locking is not performed, and no holding force is produced. Thus, tilt and telescopic adjustment can be smoothly performed.

Accordingly, in the above-described state, the guide member 13, the mesh release plate 14, the distance bracket 6, and the steering column tube 2 fixed to the distance bracket 6, together with the fastening bolt 7, can be moved along the tilt-adjustment long openings 5a of the body mount bracket 5 in the direction of tilt adjustment and along the telescopic-adjustment long openings 6b of the distance bracket 6 in the direction of telescopic adjustment. Thus, the positions of the steering wheel 4 in the height direction and front-and-rear direction can be adjusted as desired in accordance with physical attributes and preferences of a driver. Further, if the operation lever 8 is turned back from the unlocked position (chain lines) shown in FIG. 2 to the locked position (solid lines) after the position of the steering wheel 4 is adjusted in this way, a tilt and telescopic adjustment locking state is established again. Thus, the steering wheel 4 is fixed at the positions in the height direction and front-and-rear direction determined by the adjustment.

As described above, this embodiment causes the fastening bolt 7 to pass through the fixed-side tooth portion 11, the movable dies 12, and the guide member 13. The fixed-side tooth portion 11 is fixed to the distance bracket 6. The movable dies 12 are provided to be slidable along the guide member 13. By rotating the mesh release plate 14 fixed to the operation lever 8 (the fastening bolt 7), the movable dies 12 are moved along the guide member 13 to be selectively meshed with the fixed-side tooth portion 11. This action locks or unlocks the fixation of the distance bracket 6 and the steering column tube 2 to the body mount bracket 5. Accordingly, the fixed-side tooth portion 11 and the movable dies 12 can be meshed with each other by the amount of turning of the operation lever 8 in a general telescopic adjustment lock structure without difficult adjustment. Thus, telescopic adjustment locking can be reliably performed, and the vertical and longitudinal positions of the steering wheel 4 can be fixed.

Moreover, a high-strength structure is obtained in which turning the operation lever 8 causes the movable dies 12 to be slid and meshed with the fixed-side tooth portion 11. Accordingly, even when a heavy impact load acts on the steering wheel 4, telescopic adjustment locking can be reliably maintained, and the position of the steering wheel 4 in the height direction does not change. Thus, safety is improved.

Furthermore, since the movable dies 12 slide along the guide member 13, the movable dies 12 can always be brought into constant mesh with the fixed-side tooth portion 11 regardless of the position of the movable dies 12 within the telescopic-adjustment long openings 6b. Thus, telescopic adjustment locking can be reliably performed.

In this embodiment, the pair of movable dies 12 are disposed on two opposite sides of the fixed-side tooth portion 11, and the spiral springs 15 are disposed to link the two movable dies 12. The two movable dies 12 are urged by the spiral springs 15 in a direction in which the movable dies 12 are brought into mesh with the fixed-side tooth portion 11. Accordingly, the pair of movable dies 12 are automatically slid by the spiral springs 15 to be meshed with the two opposite sides of the fixed-side tooth portion 11. Thus, even when a heavy impact load acts on the steering wheel 4, telescopic adjustment locking can be more reliably maintained, and the position of the steering wheel 4 in the height direction does not change. As a result, safety is improved.

Moreover, since the movable dies 12 are provided in a pair, holding force is increased. Also, holding force per movable die 12 can be set half. Accordingly, the movable dies 12 can be miniaturized.

Moreover, the mesh between the fixed-side tooth portion 11 and the movable dies 12 is mesh with teeth on both sides. Accordingly, even if the fixed-side tooth portion 11 and the movable dies 12 are not in tight mesh with each other during restraint in the direction of telescopic adjustment, when a load is inputted, the fixed-side tooth portion 11 and the movable dies 12 can be meshed with each other by a small amount of movement corresponding to the tooth pitch. Thus, the movement of an air bag in the direction of telescopic adjustment can be minimized, and an impact on a driver can be sufficiently reduced.

In this embodiment, a structure including the pair of movable dies 12 has been employed. However, depending on the magnitude or the like of an assumed impact load, a structure may be employed in which only one movable die 12 is provided above or below the fixed-side tooth portion 11 to be meshable with the fixed-side tooth portion 11. In this case, a configuration including only one movable die 12 can also be easily realized by, for example, disposing the spiral spring 15 between the guide member 13 and the movable die 12 or between a hook provided in the distance bracket 6 and a hook 12b of the movable die 12.

### [Second Embodiment]

A steering column device 101 of a second embodiment of the present invention greatly differs from the steering column device 1 of the first embodiment in the configuration of a lock mechanism 20. Other components similar to those of the first embodiment are denoted by the same reference signs and will not be further described in detail.

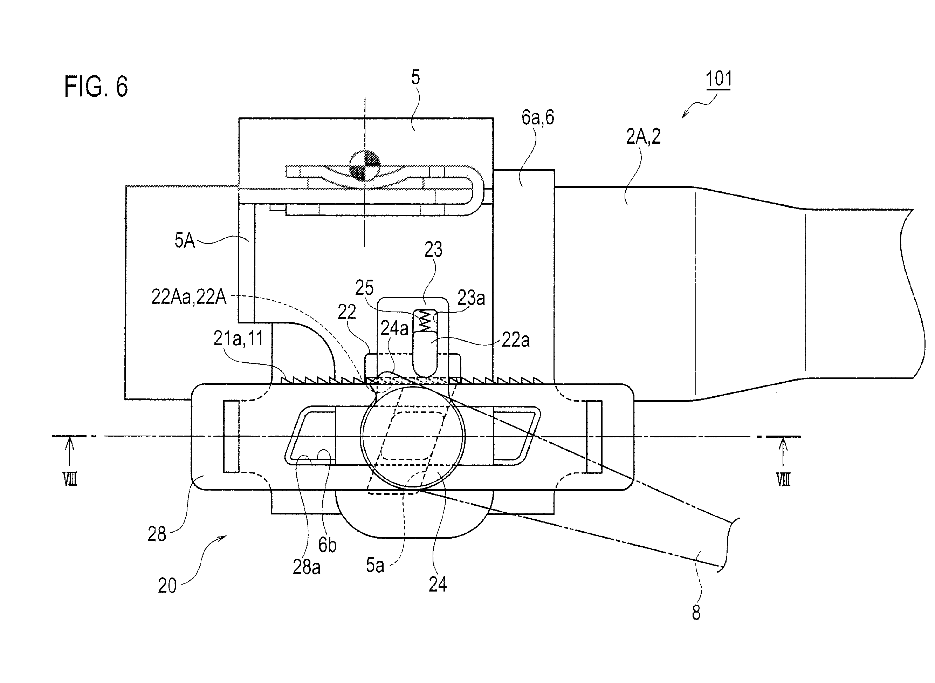

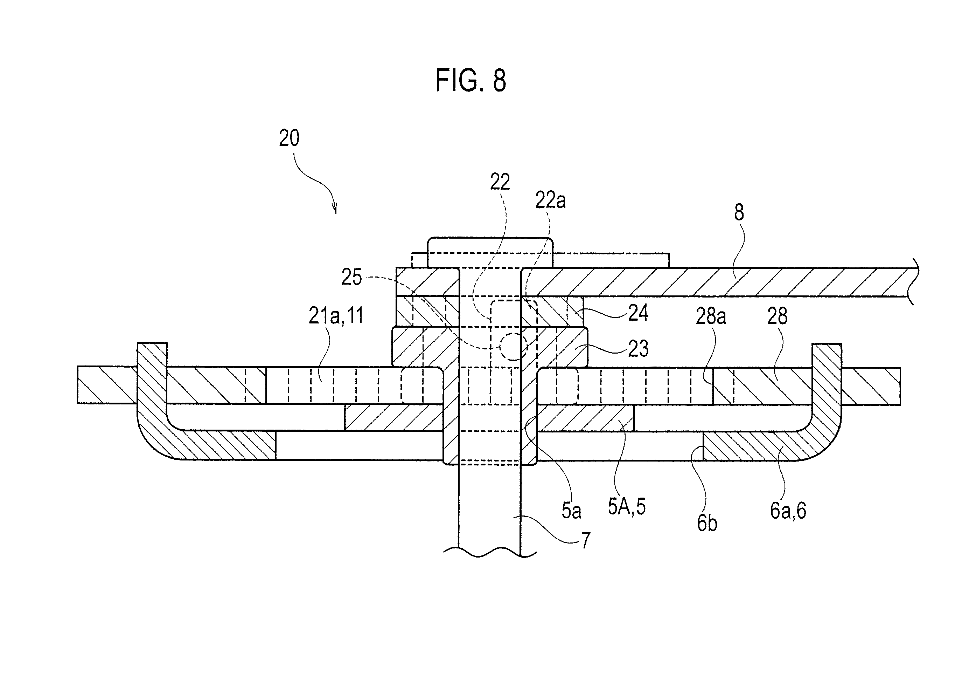

As shown in FIGS. 6 to 8, the lock mechanism 20 of this embodiment includes a tooth plate 28 which engages with the distance bracket 6 in the direction of telescopic adjustment and which is disposed such that the sidewalls 5A of the body mount bracket 5 are interposed between the tooth plate 28 and the distance bracket 6.

The tooth plate 28 is approximately rectangular, and has an auxiliary long opening 28a formed in a central portion thereof. The auxiliary long opening 28a has a shape similar to that of the telescopic-adjustment long openings 6b provided in the distance bracket 6. At an upper edge of the tooth plate 28, the fixed-side tooth portion 11 is formed in the direction of telescopic adjustment.

A guide member 23 has a guide hole 23a formed in the up-and-down direction of the vehicle as in the first embodiment.

A movable die 22 is disposed above the fixed-side tooth portion 11 to be meshable with the fixed-side tooth portion 11. The movable die 22 has a protrusion 22a which slidably passes through the guide hole 23a to protrude therefrom and which engages with an undermentioned release protrusion 24a (cam protrusion). The movable die 22 is slidably disposed between the guide member 23 and the body mount bracket 5.

A spiral spring 25 is disposed between one end of the guide hole 23a of the guide member 23 and the movable die 22 to urge the movable die 22 toward the fixed-side tooth portion 11 with a compressive reaction force.

A mesh release plate 24 is disposed outward of the guide member 23 in the width direction of the vehicle. When the mesh release plate 24 is rotated, the release protrusion 24a engages with the tip of the protrusion 22a, which protrudes from the guide hole 23a, to press the movable die 22, thus throwing the fixed-side tooth portion 11 out of mesh with a movable-side tooth portion 22A.

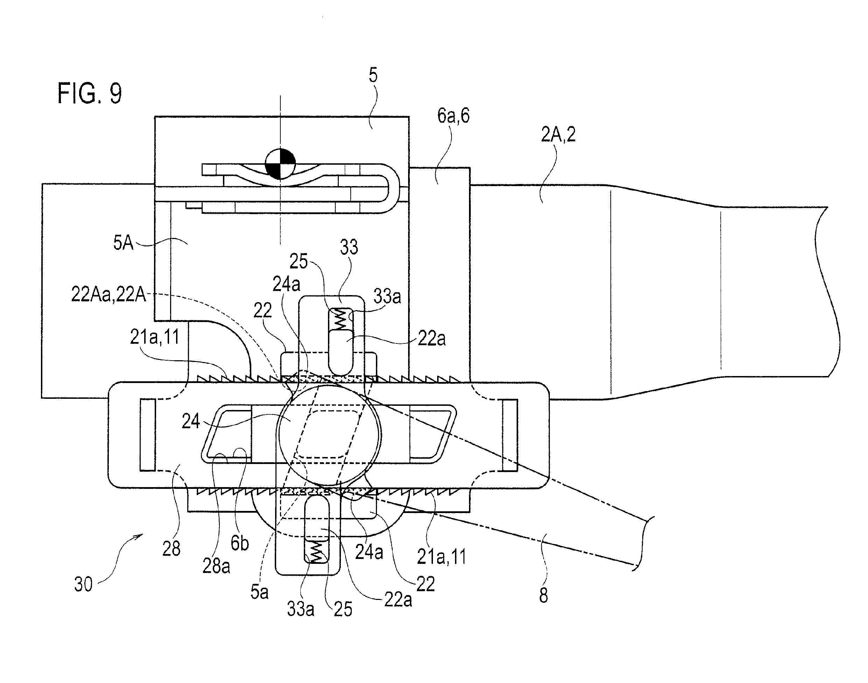

In a lock mechanism 30 shown in FIG. 9 according to a modified example of the second embodiment, the fixed-side tooth portion 11, the movable die 22, and the spiral spring 25, which are disposed only above the auxiliary long opening 28a in the second embodiment, are disposed through a guide member 33 and guide holes 33a on each of the sides above and below the auxiliary long opening 28a to be meshable.

Further, the mesh release plate 24 is fixed to an inner surface of the operation lever 8. The guide member 23 and the mesh release plate 24 are disposed to face each other. On surfaces of the guide member 23 and the mesh release plate 24 which face each other, cam faces are formed, respectively. As shown in FIG. 9, the fastening bolt 7 is inserted into the tilt-adjustment long openings 5a and the telescopic-adjustment long openings 6b, and the operation lever 8 is fixed to one end portion of the fastening bolt 7 which protrudes outward from the body mount bracket 5, with the lock mechanism 30 interposed therebetween. Thus, when the operation lever 8 is turned, cam noses of the cam faces abut against each other to impart an axial force to the fastening bolt 7.

When the operation lever 8 is brought to a locked position shown in FIGS. 6 and 9 by the lock mechanism 20 or 30 configured as described above, the release protrusion or protrusions 24a provided on the outer circumference of the mesh release plate 24 in a protruding manner is or are out of engagement with the protrusion or protrusions 22a provided in the movable die or dies 22 in a protruding manner. Thus, the movable die or dies 22 is or are pressed against the fixed-side tooth portion 11 by the spiral spring or springs 25, and movable teeth 22Aa formed in the movable die or dies 22 are automatically meshed with fixed teeth 21a of the fixed-side tooth portion 11. Moreover, when the operation lever 8 is turned to a locked side, the body mount bracket 5 is clamped between and thus pressure-contacted with the distance bracket 6 and the tooth plate 28 by the axial force of the fastening bolt 7, thus being restrained in the direction of telescopic adjustment.

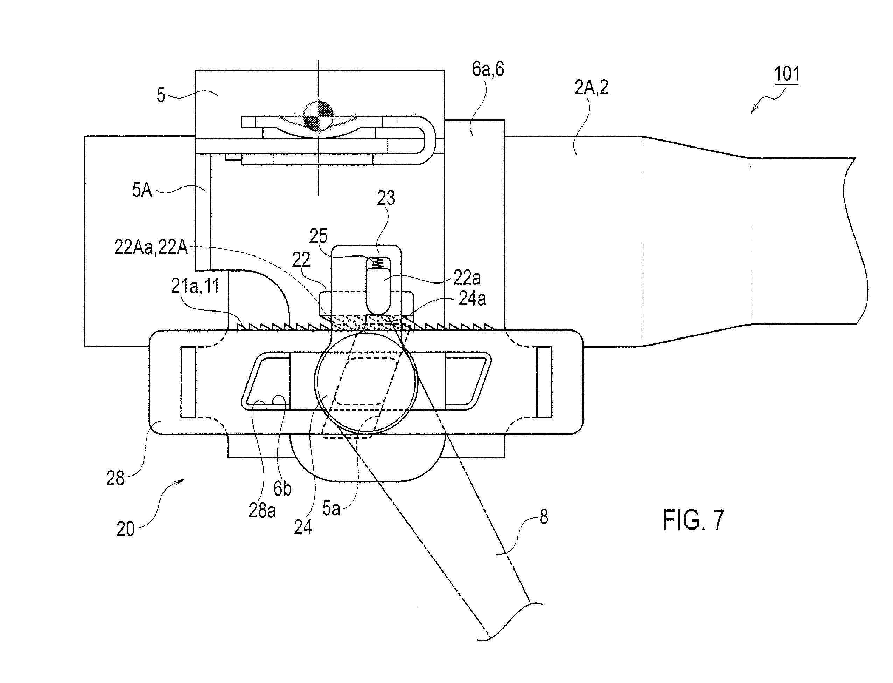

When the operation lever 8 is, for the sake of tilt and telescopic adjustment, turned to the unlocked position shown in FIG. 7, the release protrusion 24a provided in a protruding manner in the mesh release plate 24 which rotates together with the operation lever 8 engages with the protrusion 22a of the movable die 22 to push the movable die 22 against the urging force of the spiral spring 25. Thus, the movable die 22 slides along the guide hole 23a of the guide member 23 or the movable dies 22 slide along the guide holes 33a of the guide members 33. Accordingly, the movable teeth 22Aa of the movable die 22 move away from the fixed teeth 21a of the fixed-side tooth portion 11 to be thrown out of mesh therewith, and telescopic adjustment locking is also released.

The second embodiment and the modified example thereof provide functions and effects similar to those of the first embodiment. Further, the movable die 22 is disposed above, below, or above and below the fixed-side tooth portion 11 to be meshable with the fixed-side tooth portion 11, and the spiral spring 25 is disposed between the guide member and the movable die or dies. Accordingly, the number of movable dies 22 can be easily changed to one or two in accordance with the magnitude of an assumed impact load.

Moreover, the body mount bracket 5 is clamped between and thus pressure-contacted with the distance bracket 6 and the tooth plate 28, and the tooth plate 28 is clamped between and thus pressure-contacted with the body mount bracket 5 and the guide member 23 or 33. Accordingly, this configuration enables preventing movement in the direction of telescopic adjustment when a heavy load is inputted, and increasing holding force in the direction of telescopic adjustment even in a state in which the fixed-side tooth portion and the movable-side tooth portion or portions are out of mesh with each other during normal usage.

Furthermore, cam faces, which are formed in the slide cam 16 and the lever cam 17 in the first embodiment, are integrally formed in the guide member 23 and the mesh release plate 24, respectively. Accordingly, compared to the first embodiment, the slide cam 16 and the lever cam 17 can be omitted. This reduces the number of components, and realizes the simplification and miniaturization of the structure.

Although some embodiments of the present invention have been described above, the present invention is not limited to the above-described embodiments, and various modifications can be made thereto.

## Claims

1. A steering column device comprising:
a body mount bracket fixed to a vehicle body;
a steering column tube configured to rotatably support a steering shaft;
a distance bracket fixed to the steering column tube;
a fixed-side tooth portion provided in any one of the body mount bracket and the distance bracket movably together in an axial direction of the steering shaft, the fixed-side tooth portion having a plurality of fixed teeth formed in a form of a rack in the axial direction;
a guide member having a guide portion formed in a direction perpendicular to the axial direction;
a movable die disposed to be movable along the guide portion, the movable die including a movable-side tooth portion having a plurality of movable teeth formed in a form of a rack in the axial direction;
an urging unit configured to urge the movable-side tooth portion toward the fixed-side tooth portion;
a fastening bolt passing through the body mount bracket, the distance bracket, and the guide member, the fastening bolt being configured to be rotatable between a locked side at which movement of the distance bracket is locked and an unlocked side at which the distance bracket is unlocked; and
a cam member having a cam protrusion and configured to rotate together with the fastening bolt, wherein
when the fastening bolt is rotated to the locked side, movement of the distance bracket in the axial direction is restrained by the movable die displaced by an urging force of the urging unit to bring the movable-side tooth portion into mesh with the fixed-side tooth portion and by the body mount bracket and the distance bracket brought into pressure contact with each other with an axial force of the fastening bolt, and
when the fastening bolt is rotated to the unlocked side, a restraint of movement of the distance bracket in the axial direction is released by the movable die displaced by the cam protrusion to bring the movable-side tooth portion out of mesh with the fixed-side tooth portion and by the body mount bracket and the distance bracket brought out of pressure contact with each other with the axial force of the fastening bolt released.

2. The steering column device according to claim 1, wherein
any one of the body mount bracket and the distance bracket has a telescopic-adjustment long opening formed in the axial direction,
the fixed-side tooth portion is disposed in at least one of upper and lower portions of the telescopic-adjustment long opening,
the movable die includes:
the movable-side tooth portion disposed above, below, or above and below the fixed-side tooth portion to be meshable with the fixed-side tooth portion; and
a protrusion configured to slidably pass through the guide portion and to engage with the cam protrusion, and
the urging unit urges the movable die toward the fixed-side tooth portion.

3. The steering column device according to claim 1, further comprising:
a tooth plate configured to engage with the distance bracket in the axial direction and disposed so that the body mount bracket is interposed between the tooth plate and the distance bracket,
wherein the tooth plate has a telescopic-adjustment long opening formed in the axial direction,
the fixed-side tooth portion is disposed in at least one of upper and lower portions of the telescopic-adjustment long opening,
the movable die includes:
the movable-side tooth portion disposed above, below, or above and below the fixed-side tooth portion to be meshable with the fixed-side tooth portion; and
a protrusion configured to slidably pass through the guide portion and to engage with the cam protrusion,
the urging unit is disposed between the guide member and the movable die, and
when the fastening bolt is rotated to the locked side, the movement of the distance bracket in the axial direction is restrained by the body mount bracket clamped with pressure between the distance bracket and the tooth plate with the axial force of the fastening bolt.
